# EUROPÄISCHE PATENTANMELDUNG

(11) **EP 1 477 517 A1**
(43) Veröffentlichungstag der Anmeldung: **17.11.2004**
(21) Anmeldenummer: 04010539.7
(22) Anmeldetag: 04.05.2004
(51) Int. Cl.: C08K 3/32, C08K 5/3477, C08K 5/3492, C08K 5/52, C09K 21/12

(54) **Flammschutzadditiv für polymere Massen mit verbesserter hydrothermaler Stabilität**

(30) Priorität: 13.05.2003 DE 10321286
(71) Anmelder: Clariant GmbH, 65929 Frankfurt am Main (DE)
(72) Erfinder: Eisenträger, Frank, Dr., 50354 Hürth (DE); Krause, Werner, Dr., 50354 Hürth (DE); Hörold, Sebastian, Dr., 86420 Diedorf (DE); Wanzke, Wolfgang, Dr., 86161 Augsburg (DE); Anna, Peter, Dr., 1223 Budapest (HU); Bertalan, György, Dr., 1126 Budapest (HU); Marosi, Gyorgy, Dr., 1015 Budapest (HU); Marton, Andrea, 4541 Nyirjako (HU); Zimonyi, Emese, Dr., 2040 Budaörs (HU)
(74) Vertreter: Paczkowski, Marcus, Dr.

(57) **Zusammenfassung**

Die Erfindung betrifft eine flammwidrige polymere Masse, enthaltend
50 - 95 Gew.-% Polymermatrix, bezogen auf die Gesamtmenge der flammwidrigen polymeren Masse, und
5 - 50 Gew.-% Flammschutzadditivsystem, bezogen auf die Gesamtmenge der flammwidrigen polymeren Masse.

## Beschreibung

Die vorliegende Erfindung bezieht sich auf flammwidrige polymere Massen, bestehend aus einer Polymermatrix und einem Flammschutzadditivsystem.

Bekannt sind alkoholgruppenhaltige Derivate von N-heteroatomhaltigen cyclischen Verbindungen, z.B. Tris(2-hydroxyethyl)isocyanurat, als synergistisch wirkende Zusätze zu Ammoniumpolyphosphat enthaltenden flammwidrigen Formulierungen von Polyolefinmassen wie sie in EP 0 258 685 A1 beschrieben sind. Die niedrige Schmelztemperatur und niedrige Viskosität des Synergisten beschränkt jedoch die Verarbeitungsbedingungen der Masse.

Durch Esterderivate der erwähnten Synergisten mit Phosphorsäure gemäß der US-PS 4,461,862 und mit aromatischen Polycarbonsäuren gemäß der EP 584 567 A1 wird das durch die niedrige Viskosität bedingte Problem beseitigt. Der Verarbeitung der die obenerwähnten Synergisten und Ammoniumpolyphosphat enthaltenden Massen bei hohen Temperaturen werden durch die zwischen Synergisten und Ammoniumpolyphosphat stattfindenden Reaktionen, die zum Ausschwitzen führen, Grenzen auferlegt. Dabei versteht man unter "Ausschwitzen" den Verlust an Bestandteilen des Flammschutzadditivsystems bei Lagerung in Wasser oder bei einer beschleunigten Alterung in einer Klimakammer.

Es wurde nun gefunden, daß das Melaminsalz der aus Hydroxyalkylisocyanurat, Phosphorpentoxid, Fettsäureteilester von Glycerin und Siliconverbindungen wie Alkoxysilan und/oder Phenylalkylsiloxan, hergestellten oligomeren Verbindung bei Zusatz zu Ammoniumpolyphosphat enthaltenden polymeren Massen zu einer guten Flammschutzwirkung führt, ohne daß es dabei zu einem Ausschwitzen der Flammschutzmittel kommt.

Gegenstand der Erfindung ist somit eine flammwidrige polymere Masse, enthaltend
50 - 95 Gew.-% Polymermatrix, bezogen auf die Gesamtmenge der flammwidrigen polymeren Masse, und
5 - 50 Gew.-% Flammschutzadditivsystem, bezogen auf die Gesamtmenge der flammwidrigen polymeren Masse.

Überraschenderweise zeigt die erfindungsgemäße flammwidrige polymere Masse eine hohe hydrothermale Stabilität und eine langfristige Lagerstabilität, d.h. die flammwidrige polymere Masse kann auch bei erhöhter Temperatur verarbeitet und eine lange Zeit ohne Ausschwitzen von Bestandteilen des Flammschutzadditivsystems gelagert werden.

Bevorzugt enthält die flammwidrige polymere Masse
60 - 85 Gew.-% einer Polymermatrix, bezogen auf die Gesamtmenge der flammwidrigen polymeren Masse, und
15 - 40 Gew.-% eines Flammschutzadditivsystems, bezogen auf die Gesamtmenge der flammwidrigen polymeren Masse.

Bevorzugt besteht das Flammschutzadditivsystem aus einer Mischung aus Ammoniumpolyphosphat der Formel (NH₄PO₃)ₙ (= Komponente A) und einem verschlossenen Polyol (= Komponente B) entsprechend der allgemeinen Formel I 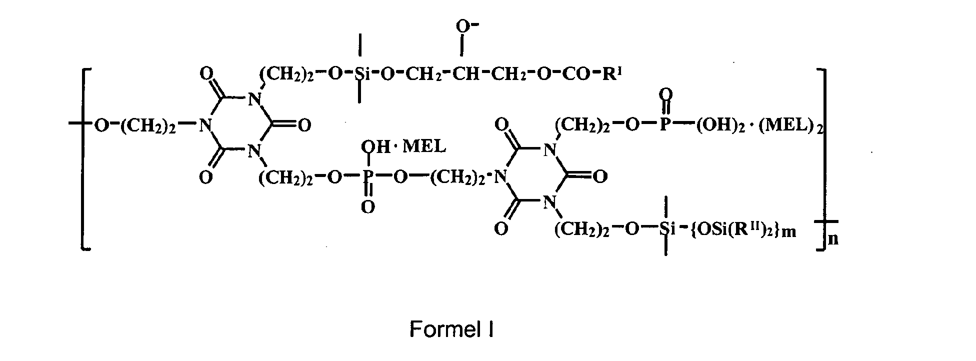 wobei es sich um das Melaminsalz des oligomeren Reaktionsprodukts aus Hydroxyalkylderivat der Isocyanursäure, Phosphorpentoxid, Fettsäureteilester von Glycerin und Siliconverbindungen aus der Reihe Alkoxysilan und/oder Hydroxyalkylarylsiloxan handelt und wobei n = 4 - 6, m = 2 - 5, R¹ = Ester aus gesättigter oder ungesättigter Fettsäure und aus Glycerin oder anderen Polyolen mit mindestens einer freien Alkoholgruppe, R" = Alkylkette mit C-Anzahl 1 - 4 oder Phenylgruppe, MEL = Melamin bedeutet.

Besonders bevorzugt handelt es sich bei der Komponente (B) um ein Reaktionsprodukt aus Tris(2-hydroxyethyl)isocyanurat, Phosphorpentoxid, Glycerinmonostearat und Melamin in Gegenwart von indifferentem und reaktionsfähigem Lösungsmittel, wie Alkoxysilan, als Reaktionsmedium.

Bevorzugt besteht das Flammschutzadditivsystem aus einer Mischung aus
90 - 50 Gew.-% der Komponente (A) und
10 - 50 Gew.-% der Komponente (B).

Besonders bevorzugt besteht das Flammschutzadditivsystem aus einer Mischung aus
75 - 60 Gew.-% der Komponente (A) und
25 - 40 Gew.-% der Komponente (B).

Die vorliegende Erfindung betrifft auch eine flammwidrige polymere Masse, bei der als Polymer ein thermoplastisches Polymer wie Polyolefine, Vinylacetatcopolymerisate, Polyamide usw. oder deren Mischung enthalten ist.

Die vorliegende Erfindung betrifft ferner eine flammwidrige polymere Masse, bei der als Polymer ein duroplastisches Polymer, wie Epoxidharze oder ungesättigte Polyester, enthalten ist.

Das Ammoniumpolyphosphat hat die chemische Struktur (NH₄PO₃)n, wobei n eine Zahl zwischen 1 und mehr als 10000 und bevorzugt zwischen 200 und 1000 bedeutet.

Bei der Komponente (B) handelt es sich um ein Additionskondensationsprodukt der Einsatzstoffe
- Tris(hydroxyethyl)isocyanurat (THEIC),
- Phosphorpentoxid,
- Fettsäureteilester von Glycerin
- Melamin
- Siliconverbindungen, wie
- Alkoxysilan, z.B. Tetraethoxysilan, oder andere Alkoxysilane, und/oder
- Hydroxyalkyl- oder -alkylarylsiloxan, wobei die Alkylgruppe 1-6 Kohlenstoffatome aufweisen kann und die Arylgruppe gegebenenfalls substituiert ist.

Die thermoplastischen Polymere, in denen die neuen Flammschutzmittel-Kombinationen eingesetzt werden können, sind in der internationalen Patentanmeldung PCT/EP 97/01664 beschrieben.

Hierzu gehören:
1. Polymere von Mono- und Diolefinen, beispielsweise Polypropylen, Polyisobutylen, Polybutylen, Polybuten-1, Polyisopren oder Polybutadien sowie Polymerisate von Cycloolefinen wie etwa von Cyclopenten oder von Norbornen; ferner Polyethylen, welches gegebenenfalls vernetzt sein kann, z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
2. Mischungen der vorgenannten Polymere, beispielsweise Mischungen von Polypropylen mit Polyisobutylen, Polypropylen mit Polyethylen (z.B.: PP/HDPE, PP/LDPE) und Mischungen verschiedener Polyethylentypen wie etwa LDPE/HDPE.
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, etc. Ferner Ethylen-Alkylacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit den unter 1. genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere, und alternierend oder statistisch aufgebaute Polyalkylen/Kohlenstoffmonoxid-Copolymere und deren Mischungen mit anderen Polymeren wie z.B. Polyamiden.
4. Polystyrol, Poly(p-methylstyrol), Poly(α-methylstyrol).
5. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methacrylat; Mischungen von hoher Schlagzähigkeit aus Styrol-Copolymerern und einem anderen Polymer, wie z.B. einem Polyacrylat, einem Dien-Polymeren oder einem Ethylen-Propylen-Dien-Terpolymeren; sowie Block-Copolymere des Styrols wie z.B. Styrol-Butadien-Styrol, Styrol-Isopren-Styrol, Styrol-Ethylen/Butylen-Styrol oder Styrol-Ethylen/Propylen-Styrol.
6. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (oder Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien, Styrol und Maleinsäureimid auf Polybutadien; Styrol und Alkylacrylate bzw. Alkylmethacrylate auf Polybutadien; Styrol und Acrylnitril auf Ethylen-Propylen-Dien-Terpolymere; Styrol und Acrylnitril auf Polyalkylacrylaten oder Polyalkylmethacrylaten; Styrol und Acrylnitril auf Acrylat-Butadien-Copolymere, sowie deren Mischungen mit den unter 5. genannten Polymeren, wie z.B. als sogenannte ABS-, MBS-, ASA oder AES-Polymere bekannt sind.
7. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
8. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
9. Copolymere der unter 8. genannten Monomere untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
10. Polymere, die sich von ungesättigten Alkoholen und Aminen bzw. deren Acetylderivaten oder Acetalen ableiten, wie Polyvinylalkohol, Polyvinylacetat, - stearat, -benzoat, -maleat, Polyvinylbutyral, Polyallylphthalat, Polyallylmelamin; sowie deren Copolymere mit den unter 1. genannten Olefinen.
11. Polyacetale, wie Polyoxymethylen, sowie solche Polyoxymethylene, die Comonomere wie z.B. Ethylenoxid enthalten; Polyacetale, die mit thermoplastischen Polyurethanen, Acrylaten oder MBS modifiziert sind.
12. Polyphenylenoxide und -sulfide und deren Mischungen mit Styrolpolymeren oder Polyamiden.
13. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide hergestellt aus Hexamethylendiamin und Iso- und/oder Terephthalsäure und gegebenenfalls einem Elastomer als Modifikator, z.B. Poly-2,4,4-trimethylhexamethylen-Terephthalamid oder Poly-m-phenylen-isophthalamid. Block-Copolymere der vorgenannten Polyamide mit Polyolefinen, Olefin-Copolymeren, lonomeren, oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("IM-Polyamidsysteme").
14. Polyharnstoffe, Polyimide, Polyamidimide, Polyetherimide, Polyesterimide, Polyhydantoine und Polybenzimidazole.
15. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
16. Polycarbonate und Polyestercarbonate.
17. Polysulfone, Polyethersulfone und Polyetherketone.
18. Mischungen (Polyblends) der vorgenannten Polymere, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6/6 und Copolymere.

### Herstellung der Komponente B:

Der Vervollständigung der Additionskondensationsreaktion ist es förderlich, die Komponenten in einen Reaktor mit Rührwerk, Heizung/Kühlung und Evakuierungsmöglichkeit einzufüllen. Die Reaktion erfolgt vorzugsweise in Gegenwart eines inerten hochsiedenden Lösungsmittels, z.B. in Gegenwart von Petroleumether. Die Temperatur liegt bei 80°C bis 140°C. Das Lösungsmittel und die nicht umgesetzten leichtflüchtigen Reaktionskomponenten können bevorzugt im Vakuum abgetrennt werden.

Die Herstellung der repräsentativen flammwidrigen Massen erfolgt nach herkömmlichen Verfahren in einem internen Mischer bei der Plastifizierungstemperatur der Polymermatrix, indem man die Additive in das aufgeschmolzene Polymer gibt. Die Komponente (B) ist thermoplastisch, erfordert kein zusätzliches Mahlen vor Einfüllung in den internen Mischer, vorausgesetzt die Homogenisierung erfolgt bei höherer Temperatur.

Die Flammwidrigkeitseigenschaften der Massen wurden anhand 10x2x100 mm großen Prüfkörpern aus Preßplatten bestimmt. Zur Charakterisierung des Brennverhaltens wurde die Sauerstoffgrenzkonzentration (LOI) gemäß ISO 4589-2 gemessen und nach UL 94 "Vertikaltest" geprüft. Zur Prüfung auf Ausschwitzen wurde die Leitfähigkeit einer für die Extraktion einer 44x44x2 mm großen Platte eingesetzten Wassermenge von 100 cm³ gemessen.

Die folgenden Beispiele sollen die vorliegende Erfindung näher erläutern, ohne sie jedoch darauf zu beschränken.

### Beispiel 1

Die Herstellung der Komponente (B1) wurde wie folgt durchgeführt. In ein 150 cm³ Petroleumether (120) enthaltendes Gefäß wurden 10 g (0,028 mol) Glycerinmonostearat eingewogen. Es wurde auf 80°C erhitzt. Bei der auf 80°C konstant gehaltenen Temperatur wurden dem Gefäß 50 g (0,19 mol) Trishydroxyethylisocyanurat (THEIC) und 43 g (0,3 mol) Phosphorpentoxid abwechselnd portionsweise zugeführt, wonach das Reaktionsgemisch in eine viskose Suspension überging. Nach 1 stündigem Rühren bei 80°C wurde das Reaktionsgemisch mit 72 g (0,57 mol) Melamin neutralisiert. Nach 1 stündigem Weiterrühren wurden 250 g (1,2 mol) Tetraethoxysilan und 0,1 g Katalysator (Dibutylzinndilauratlösung) zugegeben. Bei der Silylierung freigesetztes Ethanol wurde kontinuierlich beim Siedepunkt des Reaktionsgemischs abdestilliert. Die Silylierung war beendet, als kein Ethanol mehr freigesetzt wurde. Lösungsmittel und nicht umgesetztes Tetraethoxysilan wurden im Rotadest unter schwachem Vakuum abgezogen.

Die Herstellung der flammwidrigen Masse erfolgte in der Mischkammer des Plastographen Brabender 2000 durch Homogenisierung von 10% Komponente B1 und 24% Exolit AP 422 und 66% eines bei 190°C vorplastifizierten PP-Homopolymers (MFI = 4, 230°C, 2,16 kp) bei 190°C.

### Beispiel 2

Analog Beispiel 1 wurde ein zweites Muster hergestellt, nur daß diesmal die Homogenisierungstemperatur bei 220°C lag. Die Eigenschaften der Massen sind aus Tabelle 1 ersichtlich.

### Beispiel 3

Zur Herstellung der Komponente (B2) wurde von den gleichen Reaktionskomponenten und Verhältnissen der Komponenten wie in Beispiel 1 Gebrauch gemacht, mit Ausnahme der folgenden Abweichungen: statt 1,2 mol wurde 0,028 mol Tetraethoxysilan eingesetzt, die Petroleumethermenge auf 7,5 cm³ erniedrigt, erforderlich zur Agglutinierung der Reaktionspartner, das Rezept enthielt ferner 3 g Hydroxyalkylarylsiloxan. Die Herstellung wurde in einer temperatur- und rührintensitätsmäßig gezielt einstellbaren Mischkammer des Brabender-Plastographen durchgeführt. Bis auf Tetraethoxysilan und Melamin wurden der Kammer alle Komponenten zugeführt. Das Mischen wurde mit einer Rotorgeschwindigkeit von 50 UpM begonnen. Die Temperatur wurde langsam auf 80°C erhöht und 1,5 h lang auf 80°C gehalten. Nach Zusatz der Komponenten Tetraethoxysilan und Melamin zum Reaktionsgemisch wurde die Temperatur langsam auf 150°C erhöht und 1 h lang bei 150°C gehalten. Schließlich wurde die Temperatur auf 250°C erhöht und 10 min lang auf 250°C gehalten. Das thermoplastische Produkt wurde aus der Kammer ausgetragen, nach dem Erstarren gemahlen und zur Herstellung der flammwidrigen Masse eingesetzt.

Die Herstellung der flammwidrigen Masse erfolgte in der Mischkammer des Plastographen Brabender 2000 durch Homogenisierung von 10% Komponente B und 24% Exolit AP 422 und 66% eines bei 190°C vorplastifizierten PP-Homopolymers (MFI = 4, 230°C, 2,16 kp) bei 190°C.

### Beispiel 4

Analog Beispiel 3 wurde eine Masse gleicher Zusammensetzung hergestellt, nur daß diesmal die Homogenisierungstemperatur bei 220°C lag. Die Eigenschaften der Massen sind aus Tabelle 1 ersichtlich.

### Beispiel 5

Die Herstellung der Masse erfolgte in der Mischkammer des Plastographen Brabender 2000 durch Homogenisierung von 10% Trishydroxyethylisocyanurat (THEIC), 24% Exolit AP 422 und 66% eines PP-Homopolymers (MFI = 4, 230°C, 2,16 kp) bei 190°C.

### Beispiel 6

Die Herstellung der Masse erfolgte in der Mischkammer des Plastographen Brabender 2000 durch Homogenisierung von 10% Trishydroxyethylisocyanurat (THEIC), 24% Exolit AP 422 und 66% eines PP-Homopolymers (MFI = 4, 230°C, 2,16 kp) bei 220°C.

**Tabelle I**

| Einsatzstoffe | Muster Gewichtsteile der Komponenten | | | | | |
|---|---|---|---|---|---|---|
| | Beispiel 1 | Beispiel 2 | Beispiel 3 | Beispiel 4 | Beispiel 5 | Beispiel 6 |
| PP | 66 | 66 | 66 | 66 | 66 | 66 |
| APP | 24 | 24 | 24 | 24 | 24 | 24 |
| THEIC | | | | | 10 | 10 |
| B 1 | 10 | 10 | | | | |
| B 2 | | | 10 | 10 | | |
| Temperatur | 190°C | 220°C | 190°C | 220°C | 190°C | 220°C |

| Eigenschaften | | | | | | |
|---|---|---|---|---|---|---|
| Misch-Dreh-moment, Nm | 32 | 31 | 31 | 30 | 32 | 18 |
| Leitfähigkeit Extraktionswasser, µS | 38 | 40 | 36 | 38 | 80 | 240 |
| OI, % | 35 | 36 | 37 | 36 | 30 | 30 |
| UL 94 | V-0 | V-0 | V-0 | V-0 | V-0 | V-0 |

Tabelle I zeigt, daß die Referenzmassen (Beispiel 5 und 6) zwar einen hohen Sauerstoffindex und ausgezeichnetes UL-94-Brennverhalten aufweisen, aber auch ausweislich der gemessenen Leitfähigkeit des Extraktionswassers eine starke Neigung zum Ausschwitzen haben. Demgegenüber zeigen die in den Beispielen 1 bis 4 hergestellten Muster bei allen Verarbeitungstemperaturen ausweislich der niedrigen Leitfähigkeit des Extraktionswassers eine geringe Neigung zum Ausschwitzen. Daneben zeigen diese Massen ausweislich der höheren Sauerstoffgrenzkonzentration eine verbesserte Flammwidrigkeit.

## Patentansprüche

1. Flammwidrige polymere Masse, enthaltend
50 - 95 Gew.-% Polymermatrix, bezogen auf die Gesamtmenge der flammwidrigen polymeren Masse, und
5 - 50 Gew.-% Flammschutzadditivsystem, bezogen auf die Gesamtmenge der flammwidrigen polymeren Masse.

2. Flammwidrige polymere Masse nach Anspruch 1, **dadurch gekennzeichnet, daß** sie
60 - 85 Gew.-% einer Polymermatrix, bezogen auf die Gesamtmenge der flammwidrigen polymeren Masse, und
15 - 40 Gew.-% eines Flammschutzadditivsystems, bezogen auf die Gesamtmenge der flammwidrigen polymeren Masse, enthält.

3. Flammwidrige polymere Masse nach Anspruch 1 oder 2, bei der das Flammschutzadditivsystem aus einer Mischung aus Ammoniumpolyphosphat der Formel (NH₄PO₃)ₙ (= Komponente A) und einem verschlossenen Polyol (= Komponente B) entsprechend der allgemeinen Formel I 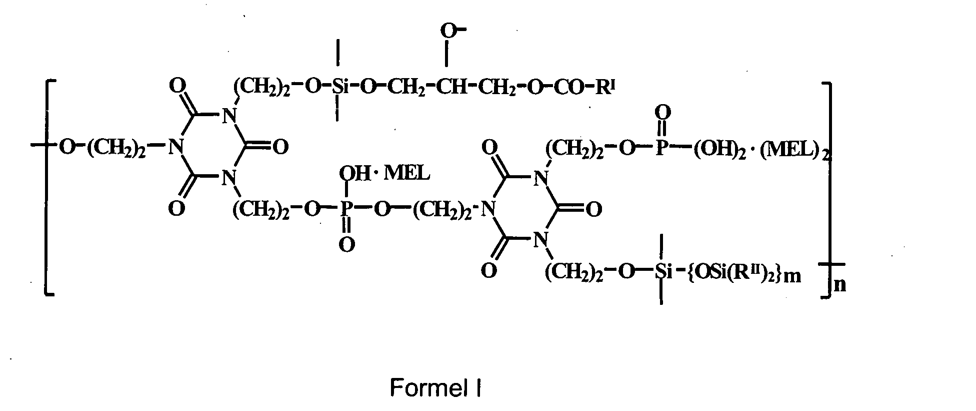 wobei n = 4 - 6, m = 2 - 5, R¹ = Ester aus gesättigter oder ungesättigter Fettsäure und aus Glycerin oder anderen Polyolen mit mindestens einer freien Alkoholgruppe, R" = Alkylkette mit C-Anzahl 1 - 4 oder Phenylgruppe, MEL = Melamin bedeutet, wobei es sich um das Melaminsalz des oligomeren Reaktionsprodukts aus Hydroxyalkylderivat der Isocyanursäure, Phosphorpentoxid, Fettsäureteilester von Glycerin und Siliconverbindungen aus der Reihe Alkoxysilan und/oder Hydroxyalkylarylsiloxan handelt, besteht.

4. Flammwidrige polymere Masse nach einem der Ansprüche 1 bis 3, bei der das Flammschutzadditivsystem aus einer Mischung aus
90 - 50 Gew.-% der Komponente (A) und
10 - 40 Gew.-% der Komponente (B) besteht.

5. Flammwidrige polymere Masse nach einem der Ansprüche 1 bis 3, bei der das Flammschutzadditivsystem aus einer Mischung aus
75 - 60 Gew.-% der Komponente (A) und
25 - 40 Gew.-% der Komponente (B) besteht.

6. Flammwidrige polymere Masse nach einem der Ansprüche 1 bis 5, bei der als Polymer ein thermoplastisches Polymer, wie HIPS (schlagzäh modifiziertes Polystyrol), Polyphenylenether, Polyamide, Polyester, Polycarbonate, oder Mischungen oder Polymerlegierungen des Typs ABS (Acrylnitril-Butadien-Styrol) oder PC/ABS (Polycarbonat/Acrylnitril-Butadien-Styrol) oder PPE/HIPS (Polyphenylenether/schlagzäh modifiziertes Polystyrol) oder Polyamid, Polyester oder Mischungen von PPE/HIPS enthalten sind.

7. Flammwidrige polymere Masse nach einem der Ansprüche 1 bis 6, bei der als Polymer ein duroplastisches Polymer, wie Epoxidharze oder ungesättigte Polyester, enthalten ist.

8. Flammwidrige polymere Masse nach Anspruch 1, bei der als (B) ein Reaktionsprodukt aus Tris(2-hydroxyethyl)isocyanurat, Phosphorpentoxid, Fettsäureteilester von Glycerin und Melamin in einem indifferenten Lösungsmittel als Reaktionsmedium enthalten ist.

9. Flammwidrige polymere Masse nach Anspruch 1, bei der als (B) ein Reaktionsprodukt aus Tris(2-hydroxyethyl)isocyanurat, Phosphorpentoxid, Fettsäureteilester von Glycerin, Melamin und einer Siliconverbindung aus der Reihe Alkoxysilan und/oder Hydroxyalkylarylsiloxan enthalten ist.
